# EUROPEAN PATENT SPECIFICATION

(11) **EP 1 102 481 B1**
(45) Date of publication and mention of the grant of the patent: **26.03.2008**
(21) Application number: 00310263.9
(22) Date of filing: 17.11.2000
(51) Int. Cl.: H04N 5/76

(54) **Improvements to data receiving apparatus**
Verbesserte Datenempfangsanlage
Améliorations à un appareil de réception de données

(30) Priority: 19.11.1999 GB 9927284
(43) Date of publication of application: 23.05.2001
(73) Proprietor: Pace Micro Technology Ltd, Saltaire, Shipley BD18 3LF (GB)
(72) Inventor: Mehra, Rahul, Pudsey, Leeds LS28 7TN (GB); Glenton, David, Stockport, Cheshire SK8 6HL (GB)
(74) Representative: Wood, Graham

(56) References cited:
- EP-A- 0 793 385
- WO-A-96/05700

## Description

The invention to which this application relates is an improvement in the utilisation of apparatus provided to receive and process digital data which is broadcast from a remote location. In particular the receiver apparatus is provided in a premises to receive data relating to television programmes and associated information which is transmitted from a remote location by a television service provider. The data is transmitted via satellite, cable or terrestrial aerial systems. When the data is received by the receiver it is processed by the same and video and/or audio is generated to be displayed to the user of the apparatus in the premises via television or other display screen and speaker systems.

The use of receiver apparatus of the type described is becoming increasingly commonplace and developments in the same to provide additional services related to the apparatus are also known. A further feature of the apparatus is that there is provided a communication link from the apparatus which allows the option for the transfer of data from the apparatus to external locations. The communications link can be of any suitable form such as a telecommunications link or via an RF cable modem.

One development with respect to the receiver apparatus is the provision of a memory means, typically in the form of a hard disk housed in the apparatus. This memory means is provided to allow data which could represent a television programme or a portion of a programme or additional data requested by the user, for example, to be stored until it is retrieved by the user. Once retrieved, the data is used to generate video and and/or audio and thus allows the user to select when they want to watch the same rather than having to follow the television broadcaster programme schedule.

Document EP0793385 describes a method of using a television to provide recording-reservation data to a VCR directly connected to the television, whereby broadcast teletext data is received by a television and transmitted to the VCR as required. In addition document WO96/05700 discloses the use of a set top box for downloading and playback of information and entertainment services from one or more distribution centres. The set top box acts as a hub between the network distribution centre and a variety of subscriber components within the home such as a TV, VCR, personal computer or stereo.

The provision of a memory means can overcome the need for a video recorder to be used, as the data can be stored on the hard disk rather than on video tape. However one advantage of video tape is that the cassette can be transferred between video machines to allow the same to be watched at another location in the premises or by another person in another premises. With the hard disk of the receiver apparatus it cannot be removed. One possible but impractical solution is to place two receiver apparatus in proximity and connect the same with a transfer cable such as, for example, a 1394 cable, to allow the transfer of data from one hard disk to another but this is obviously impractical for transferring data between apparatus in different premises. Another possibility would be to e-mail data using the telecommunications link but with the bandwidth restrictions and the volume of data which is required to be transmitted the time taken to e-mail would be unfeasible and again is impractical.

The aim of the present invention is to provide apparatus and a control system which allows for the transfer of data to another apparatus on the basis of instructions received from a first apparatus.

In a first aspect of the invention there is provided receiving apparatus including a first broadcast data receiver in a first premises and at least one further broadcast data receiver in another premises, each receiver provided with the ability to receive data broadcast from a remote location and process the same to generate audio and/or video displays respectively, the first receiver being provided with a means to allow the transmission of a data message to the at least one further broadcast data receiver at the recipient location and/or the data broadcaster to provide an indication to a user of said at least one further receiver of the receipt of the data message, said message data indicating a selected portion of data which has been or is to be received by said apparatus and characterised in that the message data includes information indicating the party sending the data message such that the receipt of the data message selectively causes the control of the further broadcast data receiver to receive the selected portion of data based on the indication of the sending party.

Typically receipt of the data message causes the control of the apparatus at the identified location to receive and/or store the selected portion of data.

In one embodiment, the data which is sent to the broadcaster identifies a portion of data which forms a programme such as by identifying the channel and the start and finish times of the programme. In addition the recipient indication can be a code, address or other identification means which can be recognised by the broadcaster.

In one embodiment, the data is transmitted from the apparatus to the broadcaster via a telecommunication link from the receiver apparatus.

In one embodiment, when the broadcaster receives the data, the next transmission time of the selected portion of data is identified and, at that time, the selected data is transmitted to the recipient receiver, together with data which causes the selected data to be recorded in the memory hard disk of that recipient's receiver apparatus.

In an alternative embodiment, when the broadcaster receives the data from the first apparatus the broadcaster identifies the selected portion of data and then chooses an appropriate time to transmit the data to the recipient receiver in a memory of the recipient broadcast data receiver such as a hard disk memory.

In a yet further embodiment the data message may be sent to the broadcaster from the first apparatus prior to the transmission of the selected portion of the data to the further apparatus. In this instance all that may be required is for a record or store signal to be sent to the recipient's receiver apparatus along with suitable record times.

Alternatively the data message can be transmitted directly from the first receiver to the second receiver apparatus via communications network such as a cable or telecommunication network. In this embodiment the data message can include start and stop times of the portion of data along with the channel location for the data. This data message can be transmitted to the recipient in compliance with the data sent by the broadcaster.

In a further aspect of the invention the data message so described need not be transmitted from the first broadcast data receiver to the further receiver via the broadcast data provider but rather is sent to the other receiver directly.

In this embodiment the data can be transferred between the first and second receiver apparatus via respective telecommunications links.

In a further and alternative method of the invention the memory in which the data message and/or data relating to the selected portion of data can be stored in any suitable memory device such as a hard disk memory or alternatively in an extension memory and/or system and/or feature can be provided which allows a message to be displayed, which has been transmitted by another party and which indicates that the recipient should watch a programme identified in the message.

In a yet further embodiment, if the selected portion of data is relatively small in size, the broadcaster may select to allow the data to be transmitted from the first to second apparatus memory directly thereby overcoming the need for the broadcaster to retransmit the data.

In a further feature of the invention there is provided the ability to add security by creating a test of authorised recipients. If the party sending data was on the list the data is accepted, if not then the recipient is prompted to accept or reject the data. Alternatively an authorisation code such as a password or Personal Identification Number can be transmitted along with the data message.

In a further aspect of the invention there is provided a method to allow the user of a first broadcast data receiver in a first premises to control the operation of a second broadcast data receiver in another premises to receive a selected portion of data said method including the transmission of a data message from the first receiver apparatus to the at least one further broadcast data receiver at the recipient location and/or the data broadcaster, said message data indicating a selected portion of data which has been or is to be received by said apparatus and characterised in that the message data includes information indicating the party sending the data message such that the receipt of the data message selectively causes the control of the further broadcast data receiver to receive the selected portion of data based on the indication of the sending party.

It is envisaged that the invention can be particularly attractive to a group of users with appropriate apparatus and whereupon if one of the users in a group has viewed a particular programme or has identified a particular future programme which is of interest then they can generate the data message and transmit to some or all of the receiver apparatus of the circle of friends. In this way all of the recipients are, firstly made aware of the programme, typically by the generation of a video and/or audio message which indicates the receipt of the data message by their broadcast data receiver and secondly can decide whether to actually watch the portion of selected data which may be stored or subsequently received by their receiver. In one embodiment, the data message can include a portion which is transmitted and displayed to the recipient in a similar manner to an e-mail message along with other data which allows the control of the recipients broadcast data receiver to start to process and/or store the selected portion of data from the indicated location and at the required time period.

Specific embodiments of the invention are now described with reference to the accompanying drawings wherein
Figure 1 illustrates one form of selection screen available to a user of the first apparatus; and
Figure 2 illustrates in schematic fashion the system of the invention.

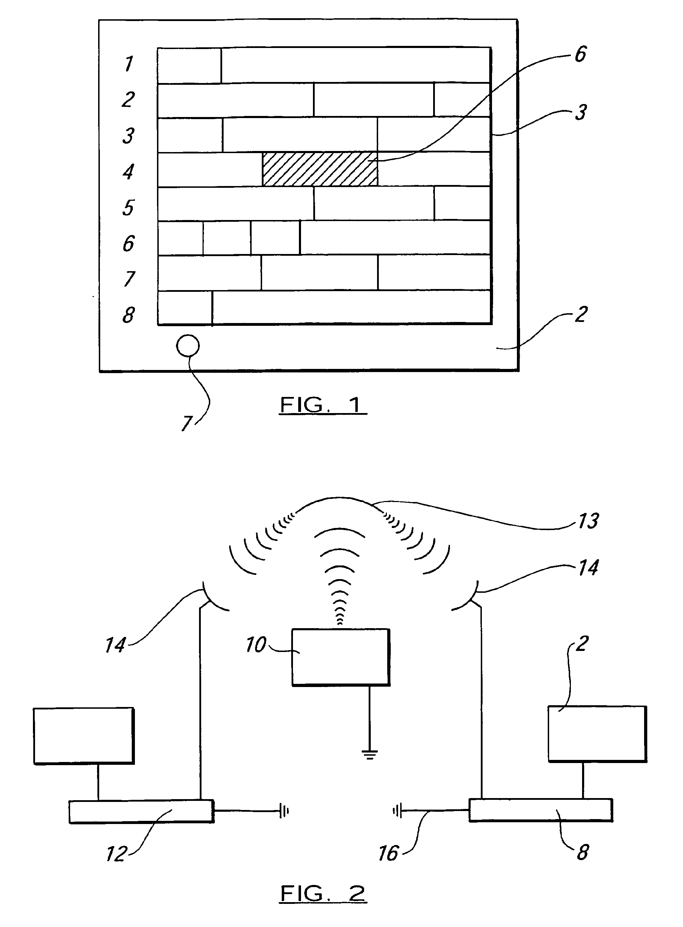

Referring firstly to Figure 1 there is illustrated a display screen 2 of a television set with a video display in the form of an Electronic programme guide (EPG). An electronic programme guide is generated by receiver apparatus from data received from a broadcaster at a remote location and provides a programme schedule, and additional programme information if selected by the user. The display shows a grid 3 which illustrates various channels and programmes which are to be shown on the same over a given time period.

In accordance with the invention, if a user, upon viewing the guide identifies a programme which they believe may be of interest to a friend or relative and which they think that person would wish to see, they can select that programme, say programme 6, by using a remote control device in a conventional manner. Once selected, they can then select a transfer or record option on screen 7 and identify an intended recipient, again by using remote control.

Upon the selection of the programme the receiver apparatus is operated in the following manner with respect to Figure 2 to generate and transmit a data message. It should however be appreciated that the selection of the programme from the EPG as described is only one possible way of initiating the invention which is the subject of the application.

Referring now to Figure 2 there is illustrated a data transmission system in accordance with the invention which can be used to generate a data message. The apparatus comprises a first receiver apparatus 8 connected to the display screen 2 of Figure 1. A broadcaster location 10 is shown which is remote from the receiver apparatus and which transmits data from which the EPG and the television programmes are generated by the receiver apparatus. Second receiver apparatus 12 is shown in another premises and it should be appreciated that any number of receiver apparatus can be provided in any number of premises. In the embodiment shown the data is transmitted via satellite 13 to receivers 14 externally of the premises and which transfer the data to the receiver apparatus. The receiver apparatus is provided with a memory means in the form of a hard disk which allows the storage of data from which television programmes or a portion of the same can be generated on demand by the user.

Although illustrated with respect to a satellite system it should be appreciated that the application can equally be used with cable or terrestrial or any other form of broadcast system.

Upon the selection by the user of a programme as illustrated in Figure 1 and an intended recipient, the system can operate in a number of ways and for the purpose of illustration one such way is now described. When the selection is made, the receiver apparatus 8 controls a modem within the same to transmit a signal via the telecommunications link 16 which transmits the data message indicating the recipient, and sufficient data for identifying the selected programme. The signal is sent to the broadcaster 10. The broadcaster, having processed the signal identifies and retrieves the data for the selected programme and identifies an available time at which the data can be transmitted from the broadcast location 10. At the designated time the data is transmitted to and is received by the intended recipient receiver 12 along with control data which causes memory means in the second apparatus 12 to start to record the data and stop recording when the data transmission is complete and from which storage means the recipient can retrieve the data and watch the programme.

As stated above this is one example of the system and there are several other ways of implementing the same. For example, if the selected programme is already scheduled for a further transmission the broadcaster, at the time of the retransmission can send to the selected recipient control data which causes the hard disk to start and stop recording at the appropriate times. Alternatively, if the selected programme is not yet transmitted, the user can transmit data either via the broadcaster or directly to the intended recipient which allows the control of the recipient's hard disk memory to record the programme data at the time of the transmission. In this embodiment it is envisaged that the sending of the data and initiating of the record function is only possible when the same is received from a previously authorised receiver apparatus so as to prevent misuse of the system.

Thus there is provided a system whereby one user can ensure that another user receives data and stores the same on the command of the first user and thereby providing a practical solution to a current problem.

In a further and alternative method of the invention a hard disk memory need not be required but rather an extension memory and/or system and/or feature can be provided which allows a message to be displayed, which has been transmitted by another party and which indicates that the recipient should watch a programme identified in the message.

In addition the system provides a revenue opportunity for the broadcaster in that they can charge for the transfer of the data and/or may also provide a data recommendation system by which they identify programmes of interest to subscribers in reaction to subscriber parameters. When the programmes are identified the broadcaster can transmit the relevant data to the subscribers hard disk memory on which the data is stored for subsequent retrieval.

Yet further the data message from the broadcast data receiver 8 can be transmitted via the telecommunications line 16 directly to the broadcast data receiver 12. In this case the data message can include data for the generation of a message to indicate the receipt of the data message in a style similar to that of the e-mail, and data is also provided which , when processed by the receiver causes the receiver 12 to tune to the selected portion of data on a designated channel from the data and at specific start and finish times determined from the data. In addition to this process the actual selected portion of data can be transmitted from the broadcast data receiver 8 to the broadcast data receiver 12 so that if for example, the user of the first receiver 8 identifies a particularly attractive programme they can store the data for the same and the, when complete transmit the data message, including the stored data portion to the receiver 12 for that apparatus user to retrieve and view via their broadcast data receiver.

## Claims

1. Data receiving apparatus including a first broadcast data receiver (8) in a first premises and at least one further broadcast data receiver (12) in another premises, each receiver provided with the ability to receive data broadcast from a remote location (10) and process the same to generate audio and/or video displays respectively, the first receiver (8) being provided with a means to allow the transmission of a data message to the at least one further broadcast data receiver (12) at the recipient location and/or the data broadcaster (10) to provide an indication to a user of said at least one further receiver (12) of the receipt of the data message, said message data indicating a selected portion of data (6) which has been or is to be received by said apparatus and **characterised in that** the message data includes information indicating the party sending the data message (8) such that the receipt of the data message selectively causes the control of the further broadcast data receiver (12) to receive the selected portion of data (6) based on the indication of the sending party.

2. Apparatus according to claim 1 **characterised in that** the receipt of the data message causes the control of the further broadcast data receiver (12) to store the selected portion of data (6).

3. Apparatus according to claim 1 **characterised in that** the data message and the selected portion of data (6) is generated by the first data receiving apparatus (8) in response to user instructions.

4. Apparatus in accordance with claim 1 **characterised in that** the data is transmitted from the first receiver (8) to a data broadcaster (10) and the subsequent transmission of data from the broadcaster (10) to the identified recipient location causes the said further apparatus (12) to receive the selected portion of data.

5. Apparatus according to claim 4 **characterised in that** the data message transmitted from the first broadcast data receiver (8) to the broadcaster (10) relates to a programme and identifies a channel and the start and finish times of the programme (6).

6. Apparatus according to claim 1 **characterised in that** the data recipient location indication can be a code, address or other identification means which can be recognised by the broadcaster (10).

7. Apparatus according to claim 1 **characterised in that** the data is transmitted from the first apparatus (8) to the broadcaster (10) via a telecommunication link (16) from the receiver apparatus (8).

8. Apparatus according to claim 1 **characterised in that** when the broadcaster (10) receives the data, the next transmission time of the selected portion of data (6) is identified and, at that transmission time, the selected portion of data (6) is transmitted to the recipient receiver.

9. Apparatus according to claim 8 **characterised in that** the recipient apparatus (12) includes a memory and data is transmitted to cause the selected portion of data (6) to be stored in the memory.

10. Apparatus according to claim 1 **characterised in that** when the broadcaster (10) receives the data, the broadcaster (10) identifies the portion of data (6) and then chooses at an appropriate time to transmit the data to the recipient location and the data can be stored in a memory provided in the receiver apparatus (12) at the recipient location.

11. Apparatus according to claim 1 **characterised in that** the control data message is sent to the broadcaster (10) prior to the transmission of the portion (6) of the data and the broadcaster (10) transmits a store signal to the recipient's receiver apparatus (12) along with the times at which the selected portion of data (6) will be transmitted.

12. Apparatus according to claim 1 **characterised in that** the data message is transmitted directly from the first broadcast data receiver (8) to the further broadcast data receiver apparatus (12).

13. Apparatus according to claim 12 **characterised in that** the data message comprises start and stop signals for the further broadcast data receiver (12) to start and stop receiving the selected portion of data (6) when it is transmitted by the broadcaster (10).

14. Apparatus according to claim 1 **characterised in that** the data message transmitted from the first broadcast data receiver (8) to the further receiver (12) allows a message to be displayed to indicate to a recipient that they should watch a programme (6) identified in the data message.

15. Apparatus according to claim 1 **characterised in that** the data message is only received if the message is sent from an authorised broadcast data receiver (8).

16. Apparatus according to claim 1 **characterised in that** the data message is only processed by the receiver (12) if the data message includes an authorisation code.

17. A method to allow the user of a first broadcast data receiver (8) in a first premises to control the operation of a second broadcast data receiver (12) in another premises to receive a selected portion of data (6) said method including the transmission of a data message from the first receiver apparatus (8) to the at least one further broadcast data receiver (12) at the recipient location and/or the data broadcaster (10), said message data indicating a selected portion of data (6) which has been or is to be received by said apparatus and **characterised in that** the message data includes information indicating the party sending the data message such that the receipt of the data message selectively causes the control of the further broadcast data receiver (12) to receive the selected portion of data (6) based on the indication of the sending party.

## Patentansprüche

1. Datenempfangsanlage mit einem ersten Rundfunkdaten-Receiver (8) in einem ersten Gebäude und wenigstens einem weiteren Rundfunkdaten-Receiver (12) in einem anderen Gebäude, wobei jeder Receiver so ausgestattet ist, dass er Datensendungen von einem fernen Ort (10) empfangen und diese jeweils zu Audio- und/oder Videoanzeigen verarbeiten kann, wobei der erste Receiver (8) mit einem Mittel versehen ist, um die Übertragung einer Datennachricht zu dem wenigstens einen weiteren Rundfunkdaten-Receiver (12) am Empfängerort und/oder beim Datensender (10) zuzulassen, um einem Benutzer des genannten wenigstens einen weiteren Receivers (12) den Empfang der Datennachricht anzuzeigen, wobei die genannten Nachrichtendaten einen gewählten Datenteil (6) anzeigen, der von der genannten Anlage empfangen wurde oder werden solle, und **dadurch gekennzeichnet, dass** die Nachrichtendaten Informationen enthalten, welche die die Datennachricht (8) sendende Partei anzeigen, so dass der Empfang der Datennachricht selektiv bewirkt, dass die Steuerung des weiteren Rundfunkdaten-Receivers (12) den gewählten Datenteil (6) empfängt, auf der Basis der Anzeige der sendenden Partei.

2. Anlage nach Anspruch 1, **dadurch gekennzeichnet, dass** der Empfang der Datennachricht bewirkt, dass die Steuerung des weiteren Rundfunkdaten-Receivers (12) den gewählten Datenteil (6) speichert.

3. Anlage nach Anspruch 1, **dadurch gekennzeichnet, dass** die Datennachricht und der gewählte Datenteil (6) von der ersten Datenempfangsanlage (8) als Reaktion auf Benutzerbefehle erzeugt werden.

4. Anlage nach Anspruch 1, **dadurch gekennzeichnet, dass** die Daten vom ersten Receiver (8) zu einem Datensender (10) übertragen werden und die nachfolgende Übertragung von Daten vom Sender (10) zu dem identifizierten Empfängerort bewirkt, dass die genannte weitere Anlage (12) den gewählten Datenteil empfängt.

5. Anlage nach Anspruch 4, **dadurch gekennzeichnet, dass** sich die vom ersten Rundfunkdaten-Receiver (8) zum Sender (10) übertragene Nachricht auf ein Programm bezieht und einen Kanal sowie die Anfangs und Endzeiten des Programms (6) identifiziert.

6. Anlage nach Anspruch 1, **dadurch gekennzeichnet, dass** die Anzeige des Datenempfängerorts ein Code, eine Adresse oder ein anderes Identifikationsmittel sein kann, das der Sender (10) erkennen kann.

7. Anlage nach Anspruch 1, **dadurch gekennzeichnet, dass** die Daten von der ersten Anlage (8) über eine Telekommunikationsverbindung (16) von der Receiveranlage (8) zum Sender (10) übertragen werden.

8. Anlage nach Anspruch 1, **dadurch gekennzeichnet, dass**, wenn der Sender (10) die Daten empfängt, die nächste Übertragungszeit des gewählten Datenteils (6) identifiziert und der gewählte Datenteil (6) zu dieser Übertragungszeit zum Empfänger-Receiver übertragen wird.

9. Anlage nach Anspruch 8, **dadurch gekennzeichnet, dass** die Empfängeranlage (12) einen Speicher beinhaltet und Daten übertragen werden, um zu bewirken, dass der gewählte Datenteil (6) in dem Speicher gespeichert wird.

10. Anlage nach Anspruch 1, **dadurch gekennzeichnet, dass** der Sender (10), wenn er die Daten empfängt, den Datenteil (6) identifiziert und dann wählt, die Daten zu einem geeigneten Zeitpunkt zum Empfängerort zu übertragen, und die Daten können in einem Speicher gespeichert werden, der in der Empfängeranlage (12) am Ort des Empfängers vorgesehen ist.

11. Anlage nach Anspruch 1, **dadurch gekennzeichnet, dass** die Steuerdatennachricht vor der Übertragung des Datenteils (6) zum Sender (10) gesendet wird und der Sender (10) ein Speichersignal zur Receiveranlage (12) des Empfängers zusammen mit den Zeiten überträgt, zu denen der gewählte Datenteil (6) übertragen wird.

12. Anlage nach Anspruch 1, **dadurch gekennzeichnet, dass** die Datennachricht direkt vom ersten Rundfunkdaten-Receiver (8) zu der weiteren Rundfunkdaten-Receiveranlage (12) übertragen wird.

13. Anlage nach Anspruch 12, **dadurch gekennzeichnet, dass** die Datennachricht Start- und Stoppsignale für den weiteren Rundfunkdaten-Receiver (12) zum Starten und Stoppen des Empfangs des gewählten Datenteils (6) umfasst, wenn er vom Sender (10) übertragen wird.

14. Anlage nach Anspruch 1, **dadurch gekennzeichnet, dass** die vom ersten Rundfunkdaten-Receiver (8) zum weiteren Receiver (12) übertragene Datennachricht die Anzeige einer Nachricht zulässt, um einen Empfänger anzuweisen, ein in der Datennachricht identifiziertes Programm (6) anzusehen.

15. Anlage nach Anspruch 1, **dadurch gekennzeichnet, dass** die Datennachricht nur dann empfangen wird, wenn die Nachricht von einem autorisierten Rundfunkdaten-Receiver (8) gesendet wird.

16. Anlage nach Anspruch 1, **dadurch gekennzeichnet, dass** die Datennachricht nur dann vom Receiver (12) verarbeitet wird, wenn die Datennachricht einen Autorisierungscode enthält.

17. Verfahren, um es dem Benutzer eines ersten Rundfunkdaten-Receivers (8) in einem ersten Gebäude zu gestatten, den Betrieb eines zweiten Rundfunkdaten-Receivers (12) in einem anderen Gebäude zu steuern, um einen gewählten Datenteil (6) zu empfangen, wobei das genannte Verfahren die Übertragung einer Datennachricht von der ersten Receiveranlage (8) zu dem wenigstens einen weiteren Rundfunkdaten-Receiver (12) am Empfängerort und/oder beim Datensender (10) beinhaltet, wobei die genannten Nachrichtendaten einen gewählten Datenteil (6) anzeigen, der von der genannten Anlage empfangen wurde oder werden soll, **dadurch gekennzeichnet, dass** die Nachrichtendaten Informationen enthalten, welche die die Datennachricht sendende Partei anzeigen, so dass der Empfang der Datennachricht selektiv bewirkt, dass die Steuerung des weiteren Rundfunkdaten-Receivers (12) den gewählten Datenteil (6) empfängt, auf der Basis der Anzeige der sendenden Partei.

## Revendications

1. Appareil de réception de données comportant un premier récepteur de données diffusées (8) situé dans un premier endroit et au moins un récepteur supplémentaire de données diffusées (12) situé dans un autre endroit, chaque récepteur étant doté de l'aptitude à recevoir une diffusion de données à partir d'un emplacement distant (10) et à traiter celle-ci afin de générer des affichages audio et/ou vidéo respectivement, le premier récepteur (8) étant doté de moyens permettant d'assurer la transmission d'un message de données vers ledit au moins un récepteur supplémentaire de données diffusées (12) au niveau de l'emplacement destinataire et/ou l'organisme diffuseur de données (10) afin de fournir une indication à un utilisateur dudit au moins un récepteur supplémentaire (12) pour lui signaler la réception du message de données, ledit message de données indiquant une portion sélectionnée de données (6) qui a été reçue ou est destinée à être reçue par ledit appareil, et **caractérisé en ce que** le message de données comporte des informations indiquant le correspondant envoyant le message de données (8) de sorte que la réception du message de données oblige de façon sélective la commande du récepteur supplémentaire de données diffusées (12) à recevoir la portion sélectionnée de données (6) sur la base de l'indication du correspondant expéditeur.

2. Appareil, selon la revendication 1, **caractérisé en ce que** la réception du message de données oblige la commande du récepteur supplémentaire de données diffusées (12) à stocker la portion sélectionnée de données (6).

3. Appareil, selon la revendication 1, **caractérisé en ce que** le message de données et la portion sélectionnée de données (6) sont générés par le premier appareil de réception de données (8) en réaction aux instructions de l'utilisateur.

4. Appareil, selon la revendication 1, **caractérisé en ce que** les données sont transmises à partir du premier récepteur (8) vers un organisme diffuseur de données (10), et la transmission ultérieure des données à partir de l'organisme diffuseur (10) vers l'emplacement destinataire identifié oblige ledit appareil supplémentaire (12) à recevoir la portion sélectionnée de données.

5. Appareil, selon la revendication 4, **caractérisé en ce que** le message de données transmis à partir du premier récepteur de données diffusées (8) vers l'organisme diffuseur (10) concerne un programme et identifie un canal ainsi que l'heure de début et l'heure de fin du programme (6).

6. Appareil, selon la revendication 1, **caractérisé en ce que** l'indication de l'endroit destinataire de données peut être un code, une adresse ou un autre moyen d'identification qui peut être reconnu par l'organisme diffuseur (10).

7. Appareil, selon la revendication 1, **caractérisé en ce que** les données sont transmises à partir du premier appareil (8) vers l'organisme diffuseur (10) via une liaison de télécommunications (16) depuis l'appareil récepteur (8).

8. Appareil, selon la revendication 1, **caractérisé en ce que** lorsque l'organisme diffuseur (10) reçoit les données, l'horaire de la transmission suivante de la portion sélectionnée de données (6) est identifié et, à cette heure de transmission, la portion sélectionnée de données (6) est transmise vers le récepteur destinataire.

9. Appareil, selon la revendication 8, **caractérisé en ce que** l'appareil destinataire (12) comporte une mémoire et des données sont transmises de façon à ce qu'il se produise un stockage de la portion sélectionnée de données (6) dans la mémoire.

10. Appareil, selon la revendication 1, **caractérisé en ce que** lorsque l'organisme diffuseur (10) reçoit les données, l'organisme diffuseur (10) identifie la portion de données (6), et choisit ensuite à un moment approprié de transmettre les données vers l'emplacement destinataire, et les données peuvent être stockées dans une mémoire prévue dans l'appareil récepteur (12) au niveau de l'emplacement destinataire.

11. Appareil, selon la revendication 1, **caractérisé en ce que** le message de données de commande est envoyé à l'organisme diffuseur (10) avant la transmission de la portion (6) de données et l'organisme diffuseur (10) transmet un signal de stockage à l'appareil récepteur (12) du destinataire en conjonction avec les horaires auxquels la portion sélectionnée de données (6) sera transmise.

12. Appareil, selon la revendication 1, **caractérisé en ce que** le message de données est transmis directement à partir du premier récepteur de données diffusées (8) vers l'appareil récepteur supplémentaire de données diffusées (12).

13. Appareil, selon la revendication 12, **caractérisé en ce que** le message de données comporte des signaux de début et de fin pour le récepteur supplémentaire de données diffusées (12) afin de démarrer et d'arrêter la portion sélectionnée de données (6) lorsqu'elle est transmise par l'organisme diffuseur (10).

14. Appareil, selon la revendication 1, **caractérisé en ce que** le message de données transmis à partir du premier récepteur de données diffusées (8) vers le récepteur supplémentaire (12) permet d'afficher un message destiné à indiquer au destinataire qu'il devrait regarder un programme (6) identifié dans le message de données.

15. Appareil, selon la revendication 1, **caractérisé en ce que** le message de données est uniquement reçu si le message est envoyé à partir d'un récepteur de données diffusées (8) autorisé.

16. Appareil, selon la revendication 1, **caractérisé en ce que** le message de données est uniquement traité par le récepteur (12) si le message de données comporte un code d'autorisation.

17. Procédé pour permettre à l'utilisateur d'un premier récepteur de données diffusées (8) situé dans un premier endroit de commander le fonctionnement d'un deuxième récepteur de données diffusées (12), situé dans un autre endroit, afin de recevoir une portion sélectionnée de données (6), ledit procédé incluant la transmission d'un message de données à partir du premier appareil récepteur (8) vers ledit au moins un récepteur supplémentaire de données diffusées (12) au niveau de l'emplacement destinataire et/ou l'organisme diffuseur de données (10), ledit message de données indiquant une portion sélectionnée de données (6) qui a été reçue ou est destinée à être reçue par ledit appareil, et **caractérisé en ce que** le message de données comporte des informations indiquant le correspondant envoyant le message de données de sorte que la réception du message de données oblige de façon sélective la commande du récepteur supplémentaire de données diffusées (12) à recevoir la portion sélectionnée de données (6) sur la base de l'indication du correspondant expéditeur.
